# EUROPEAN PATENT SPECIFICATION

(11) **EP 3 233 762 B1**
(45) Date of publication and mention of the grant of the patent: **11.09.2024**
(21) Application number: 15832919.3
(22) Date of filing: 17.12.2015
(51) Int. Cl.: C05G 3/90, C07F 5/04

(54) **ORGANIC AND INORGANIC FERTILIZER SUITABLE FOR IRRIGATED FARMING AND INCLUDING NITRIFICATION INHIBITOR AND BORON**
ORGANISCHES UND ANORGANISCHES DÜNGEMITTEL FÜR BEWÄSSERUNGSLANDWIRTSCHAFT UND MIT NITRIFIKATIONSHEMMENDEM MITTEL UND BOR
ENGRAIS ORGANIQUE ET INORGANIQUE APPROPRIÉ POUR L'AGRICULTURE IRRIGUÉE ET COMPRENANT UN INHIBITEUR DE NITRIFICATION ET DU BORE

(30) Priority: 18.12.2014 TR 201415391
(43) Date of publication of application: 25.10.2017
(73) Proprietor: Basaran, Mustafa, Çanakkale (TR); Uzun, Oguzhan, Kayseri (TR); Sahan, Serkan, Kayseri (TR); Gunes, Adem, Kayseri (TR)
(72) Inventor: Basaran, Mustafa, Çanakkale (TR); Uzun, Oguzhan, Kayseri (TR); Sahan, Serkan, Kayseri (TR); Gunes, Adem, Kayseri (TR)
(74) Representative: Kaya, Erdem
(86) International application number: PCT/TR2015/050253
(87) International publication number: WO 2016/099430

(56) References cited:
- WO-A1-2005/089755
- DE-A1- 10 164 137
- US-A- 3 625 899
- US-A1- 2004 031 303
- US-A1- 2014 037 570
- US-B1- 8 888 886
- DATABASE WPI Week 201272, Derwent World Patents Index; AN 2012-M25094, XP002756369
- DATABASE WPI Week 201447, Derwent World Patents Index; AN 2014-M97417, XP002756370

## Description

### TECHNICAL FIELD

The present invention is a fertilizer for meeting the nitrogen and boron need of a plant which is particularly suitable for irrigated farming.

### KNOWN STATE OF THE ART

in agricultural production, the mostly applied plant nutrient elements in commercial fertilizers are nitrogen, phosphor and potassium. Nitrogen is the nutrient element mostly needed by plants, and it may be easily lost by the soil as a result of leaching by means of the rain waters or by vaporizing in gas form. In order to meet the nitrogen need in agricultural production, fertilizers with nitrogen are produced in the forms of organic and inorganic liquid, composed granule, pril, crystal and powder. The losses, occurring as a result of nitrification of nitrogen in soil, are a very commonly known problem in the related art. In order to provide a solution to this problem, fertilizers, having nitrification inhibitor and where different chemical compounds and the different derivatives thereof are provided, are used in pluralities of countries in the world particularly where excessive rain is received. Specific nitrification inhibitors, DCD, triazole, pyrazole derivatives and salts obtained by means of different methods and pyrazole derivatives processed by means of poly-acid, are added to commercial fertilizers in a stand-alone manner or in the form of mixtures. Boron is applied to the plants, like sugar beet, potato, carrot, turnip, apple, pear, sunflower, water melon, pumpkin which are produced by means of irrigated farming, in the form of compounds like boric acid and sodium-tetra-borate by means of application to the leaves of plants, in order to meet the boron need of the plant.

US8888886 of patent number relates to solutions for use in reducing nitrogen volatilization comprising N-(n-butyl)-thiophosphoric triamide (NBPT) dissolved in one or more N-substituted morpholines or mixtures thereof, to methods of making fertilizers using these solutions, and to the resultant fertilizers. The solutions also find utility in reduction of odors from animal wastes. In accordance with the present invention, solutions for use in reducing nitrogen volatilization are prepared by dissolving N-(n-butyl)-thiophosphoric triamide (NBPT) in one or more N-substituted morpholines (NSM) and mixtures thereof. The solutions may optionally contain one or more carboxylic acids having up to 24 carbon atoms to adjust the pH of the solution. The solutions of NBPT in NSM or mixtures of NSM's may be combined with amino alcohols or alkyl substituted amino alcohols (ASAA) and mixtures of alkanolamines and ASAA. The solutions of NBPT in a NSM or mixture of NSM's combined with alkanolamines or ASAA may have their pH adjusted using a carboxylic acid.

US2014037570 of patent number relates to solutions for use in reducing nitrogen volatilization comprising N-(n-butyl)-thiophosphoric triamide (NBPT) dissolved in one or more N-alkyl amino alcohols, N,N-dialkyl amino alcohols, N-alkyl-N-alkoxy amino alcohols, and mixtures thereof, to methods of making fertilizers using these solutions, and to the resultant fertilizers. The solutions also find utility in reduction of odors from animal wastes, and other materials containing urine.

CN102557838 of patent number relates to nitrogen fertilizers, in particular to a multifunctional slow-release urea fertilizer and a preparation method. A multifunctional slow-release urea fertilizer: the fertilizer components include urea, biochemical inhibitors, synergists, watersoluble salt ions of medium and trace elements necessary for plants and/or beneficial elements for plant growth, in parts by weight, wherein Urea, biochemical inhibitors and synergists are calculated by weight ratio = 1: 0.001-0.1: 0.0005-0.05, and the necessary medium and trace element salt ions for plants are: calcium, magnesium, sulfur, iron, copper, zinc, manganese , one or more of boron, molybdenum, chlorine, urea and the necessary medium and trace elements for plants are calculated by weight ratio = 1: 0-0.1: 0-0.1: 0-0.06: 0.001-0.03: 0.001-0.01: 0.001-0.01: 0.001-0.008: 0.001-0.01: 0.001-0.005: 0-0.006, the beneficial elements for plant growth are silicon and selenium, and the ratio of urea to each beneficial element for plant growth in parts by weight = 1:0 -0.1:0.001-0.08.

### TECHNICAL PROBLEMS TO BE SOLVED BY THE INVENTION

Fertilizers with nitrogen are the most important of commercial fertilizers used in agricultural production. Fertilizers with nitrogen are in general produced in ammonium, nitrate and amine form. The nitrogen, which is in ammonium or amine form, is transformed into nitrate form in a rapid manner depending on the soil conditions by some nitrification bacteria. In regions which receive excessive rain or in areas where irrigated farming is realized, nitrogen loss occurs in the plant root region since the nitrate is leached in a rapid manner. The nitrate, which is subject to leaching, leads to dirt in underground waters.

It is known that pyrrole ring shows bacteriostatic effect, and it inhibits bacteria leading to nitrification. However, due to its high evaporation characteristic, its efficiency is low when it is directly applied. In order to reduce evaporation, it is transformed into metal complexes like zinc and copper as described in US Patent 4,522,642. However, its use in wide areas may lead to heavy metal accumulation in soil. Another alternative is to reduce evaporation losses by forming salt with hydrochloric acid and phosphoric acid and other strong acids as described in DE-A-4 128 828 and US Patent 3,635,690.

The present invention relates to formation of acid salt from pyrrole derivatives by using boric acid. However, since boric acid is weak acid, the efficiency decreases. Since high proportion of proton is released to the solution as a result of boric acid reactions with glycerol, sorbitol and mannitol, the new product formed is a strong acid like glycero-boric acid. The reaction of pyrrole derivatives inside the poly-alcohol-boric acid solution again leads to formation of acid salt with high efficiency. Since boron is bonded by means of ionic bond in the new product, it provides meeting of the boron need in high tonnage agricultural products and it provides controlling the nitrification in ammonium or urea based fertilizers where it is used as the nitrification inhibitor. For instance, coating of the inhibitor, formed by glycerol, to the granule fertilizers, will show lubricant effect on the granule surface during packaging and transportation of the fertilizer and during application of the fertilizer to the agriculture areas, and thus, it increases loss of the inhibitor due to erosion related to friction, and it increases the efficiency thereof. Since glycerol coating will decelerate the hydrolysis of urea in the application of granule urea onto the surface in dry farming, it inhibits the urease enzyme activity in dry seasons, and it decreases nitrogen losses in gas form. The bacteriostatic effect of the glycero-boric acid is an advantage which is well known for long years. Thanks to the bacteriostatic effect of the glycero-boric acid, the inhibitor effect of the invention is increased.

Boron is the plant nutrient substance which is very necessary for plants; therefore, it is included in the standard fertilizing programs particularly in sugar beet, potato and fruit growth, since the deficiency of boron leads to deterioration in efficiency and quality of plants. The boron amount in the present invention is at a level which will meet the boron need of plants, and the efficiency of the present invention is substantially high since it is bonded to the organic pyrrole ring by means of ionic bond. By means of the subject matter invention, since boron will be brought together with fertilizer having nitrogen, there may remain no need for the farmers to go to the field or garden 1-2 times for boron application. This will provide substantial amount of labor force, time saving and money saving.

### DESCRIPTION OF THE INVENTION

The present invention is a fertilizer suitable for irrigated farming and comprising boron and polyalcohol and nitrification inhibitor.

3,5 dimethyl-pyrazole, 3,4 dimethyl-pyrazole, 1 methyl-pyrazole, 3 methyl-pyrazole are used as the nitrification inhibitor, and boric acid, which is a weak acid, is used as the boron source. 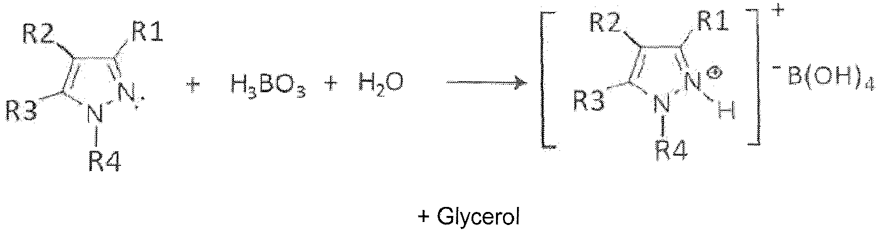 R1, R2, R3 and R4: H, CH₃, CH₂CH₃, CH₃CHCH₃, OH, OCH₃, OCH₂CH₃, CH₃OCH₂CH₃, F, Cl, Br, I, NH₂, NO₂

Boric acid is weak acid. The pH of boric acid inside water, methanol and other organic and inorganic solvents is approximately equal to 3, and the efficiency of boric acid in base reactions is low. When boric acid is dissolved in polyalcohols like glycerol, high proportion of protons are released to the medium, and the solution pH is reduced below 1 at a proportion of 2 mole glycerol/1 mole boric acid, and glycero-boric acid is formed which shows strong acid characteristic. Pyrazolium-borate salt is a product obtained by utilizing the basic characteristic of the pyrazole ring, and by utilizing the strong acid characteristic of other polyalcohol boric acid products like glycero-boric acid. The formed product can be completely dissolved in water.

Since there is slight amount of water formed as a result of the reaction, there remains no need for subjecting the coated fertilizer to the thermal process for providing drying.

### EXAMPLE

The following examples, methods or compositions are not according to the invention and are present for illustration purposes only.

For instance, 2 moles glycerol, which is a polyalcohol, is taken, for production of 3,5 Dimethyl-pyrazolium-borate, and after heating between 50-70 °C, 1 mole boric acid is added. When the dissolving is completed, the solution obtains a yellowish color, and glycero-boric acid is obtained. 1 mole 3,5 Dimethyl-pyrazole is added in parts to the glycero-boric acid solution, and the chemical reaction process is started, and after complete melting is provided, 3,5 dimethyl-pyrazolium-borate + Glycerol is obtained. 3,5 dimethyl-pyrazolium-borate, with proportion of 0.01%-1%, is added to the liquid or solid organic and inorganic, composed, granule, pril, crystal or powder fertilizer, and coating is applied by means of spraying onto surface of composed, granule, pril, crystal or powder fertilizer at temperature between 50 and 70 °C.

### INDUSTRIAL APPLICABILITY

The present invention is liquid or solid organic and inorganic, composed, granule, pril, crystal or powder fertilizer, comprising nitrification inhibitor, boron and polyalcohol, in order to meet the nitrogen need of a plant in irrigated farming, and said fertilizer is used in the form of base fertilizer in planting, upper fertilizer after planting, drip irrigation and leaf fertilizer.

## Claims

1. The present invention is a fertilizer with nitrification inhibitor which meets nitrogen and boron requirement of a plant which is suitable for irrigated agriculture and which prevents volatilization losses, **wherein** the fertilizer comprises borate salts obtained from the reaction of a polyalcohol, boron and pyrazole and having pyrazole ring as shown by the formula below: 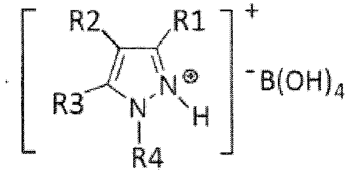 and
R1, R2, R3 and R4 molecules comprise one of H, CH₃, CH₂CH₃, CH₃CHCH₃, OH, OCH₃, OCH₂CH₃, CH₃OCH₂CH₃, F, Cl, Br, I, NH₂, NO₂ molecules.

2. A fertilizer with nitrification inhibitor according to claim 1, **wherein** said pyrazole borate salts are one of 3,5-dimethyl-pyrazole borate, 3,4-dimethyl-pyrazole borate, 1-methyl-pyrazole borate, 3-methyl-pyrazole borate compounds.

## Patentansprüche

1. Düngemittel mit Nitrifikationsinhibitor, das den Stickstoff- und Borbedarf einer Pflanze deckt, das für die Bewässerungslandwirtschaft geeignet ist und das Verflüchtigungsverluste verhindert, **wobei** das Düngemittel Boratsalze umfasst, die aus der Reaktion eines Polyalkohols, Bors und Pyrazols erhalten werden und einen Pyrazolring aufweisen, der durch die nachstehende Formel dargestellt ist: 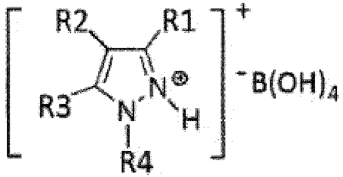 und
R1, R2, R3 und R4 eines der Moleküle H, CH₃, CH₂CH₃, CH₃CHCH₃, OH, OCH₃, OCH₂CH₃, CH₃OCH₂CH₃, F, Cl, Br, I, NH₂, NO₂ umfassen.

2. Düngemittel mit Nitrifikationsinhibitor nach Anspruch 1, **wobei** die Pyrazolboratsalze eine der Verbindungen 3,5-Dimethylpyrazolborat, 3,4-Dimethylpyrazolborat, 1-Methylpyrazolborat und 3-Methylpyrazolborat sind.

## Revendications

1. Un fertilisant avec inhibiteur de nitrification qui répond aux besoins en azote et en bore d'une plante qui est appropriée pour l'agriculture irriguée et qui empêche les pertes par volatilisation, **dans lequel** le fertilisant comprend des sels de borate obtenus à partir de la réaction d'un polyalcool, du bore et du pyrazole et ayant un anneau pyrazole comme indiqué par la formule ci-dessous: 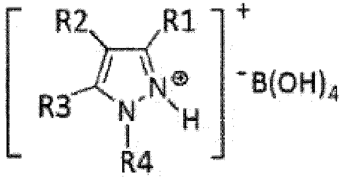 et
les molécules R1, R2, R3 et R4 comprennent l'une des molécules H, CH₃, CH₂CH₃, CH₃CHCH₃, OH, OCH₃, OCH₂CH₃, CH₃OCH₂CH₃, F, Cl, Br, I, NH₂, NO₂.

2. Un fertilisant avec inhibiteur de nitrification selon la revendication 1, **dans lequel** lesdits sels de borate de pyrazole sont l'un des composés de borate de 3,5-diméthyl-pyrazole, de borate de 3,4-diméthyl-pyrazole, de borate de 1 - méthyl-pyrazole, de borate de 3-méthyl-pyrazole.
